# EUROPEAN PATENT SPECIFICATION

(11) **EP 1 000 551 B1**
(45) Date of publication and mention of the grant of the patent: **12.11.2003**
(21) Application number: 99118766.7
(22) Date of filing: 23.09.1999
(51) Int. Cl.: A23G 9/26, A23G 7/00, A23G 3/02, A23G 3/00, A23G 3/20, A23G 3/12

(54) **Device for making stick-supported solid food products**
Einrichtung zur Herstellung von Lebensmitteln am Stiel
Appareil de fabrication d'articles alimentaires solides montés sur bâton

(30) Priority: 19.10.1998 IT MI982238
(43) Date of publication of application: 17.05.2000
(73) Proprietor: NUOVA EUROMEC S.r.l., 24057 Martinengo (Bergamo) (IT)
(72) Inventor: Rizzi, Mario, 24057 Martinengo (Bergamo) (IT)
(74) Representative: Cicogna, Franco

(56) References cited:
- EP-A- 0 195 136
- EP-A- 0 352 233
- EP-A- 0 750 978
- FR-A- 626 784
- GB-A- 2 024 089
- US-A- 2 278 574
- US-A- 2 591 033

## Description

### BACKGROUND OF THE INVENTION

The present invention relates to a device for making stick-supported solid food products.

As is known, solid food products, such as solid and soft-centered sweets, are conventionally made by using specifically designed making machines, in which a rotary plurality of hollow punch pairs, cooperation with one another, forms the individual sweet pieces (e.g. GB-A-2024089).

In particular, the single sweet pieces are formed starting from a continuous rib or strip, which is generally made by an extruding process.

More specifically, the pairs of hollow punches of these machines are mounted on a top chain therewith is tangentially engaged a bottom chain supporting corresponding cutter elements which, by engaging with corresponding element provided on the top chain, cut or shear the rib into lengths corresponding to the cutter element pitch.

While the above disclosed machines allow to make food products, even of the soft-centered type, having several threedimensional shapes, depending on the specific types and shapes of the making punches, they, on the other hand, are not adapted to continuously make food products, in particular sweet products, including each a stick for manually supporting the product proper, such as the so-called lollipops and the like.

In this connection, it is to be pointed out that a great demand for these stick-supported sweet products actually exists.

### SUMMARY OF THE INVENTION

Accordingly, the aim of the present invention is to provide such a device for making stick-supported solid food products, which allows said food products to be made in a continuous manner.

Within the scope of the above mentioned aim, a main object of the present invention is to provide such a device for making stick-supported solid food products, which allows said products to be made with a very high hour yield, thereby meeting modern industrial requirements.

Another object of the present invention is to provide such a device for making stick-supported solid food products which is very reliable and safe in operation.

According to one aspect of the present invention, the above mentioned aim and objects are achieved by a device for making stick-supported solid food products, said device comprising a supporting construction including a front shoulder and a rear shoulder, said shoulders supporting shafts having horizontal and parallel rotary axis, on each said shaft being assembled gear wheels respectively engaging with a top chain and a bottom chain, said bottom chain including bottom half-molds adapted to engage with corresponding top half-molds pertaining to said top chain to make a said food product, starting from a product rib supplied parallel to said chains, characterized in that said device further comprises feeding means for feeding said sticks to said device, and that said bottom chain is provided with chain lanes for housing said sticks, and arranged in a coupling relationship with respect to said bottom half-molds of said bottom chain.

According to a preferred embodiment of the present invention, the stick housing chain lanes adjoin said bottom half-molds of said bottom chain, in a direction substantially perpendicular to the stick feeding direction.

According to another preferred embodiment of the present invention, the bottom chain is extended with respect to the top chain, thereby facilitating the feeding of said sticks to said device.

The stick feeding means, in particular, comprise a stick feeding hopper, conveying the sticks to the product rib feeding lane and supporting a stick vessel.

According to a further preferred embodiment of the present invention, the bottom chain comprises a plurality of pin articulated chain links which, being arranged in an adjoining relationship, provide said stick housing chain lanes.

### BRIEF DESCRIPTION OF THE DRAWINGS

Further advantages and features of the present invention will become more apparent hereinafter from the following detailed disclosure given by way of an illustrative but not limitative example, and with reference to the accompanying drawings, where:
Figure 1 is a schematic side view of the device for making stick-supported solid food products according to the present invention;

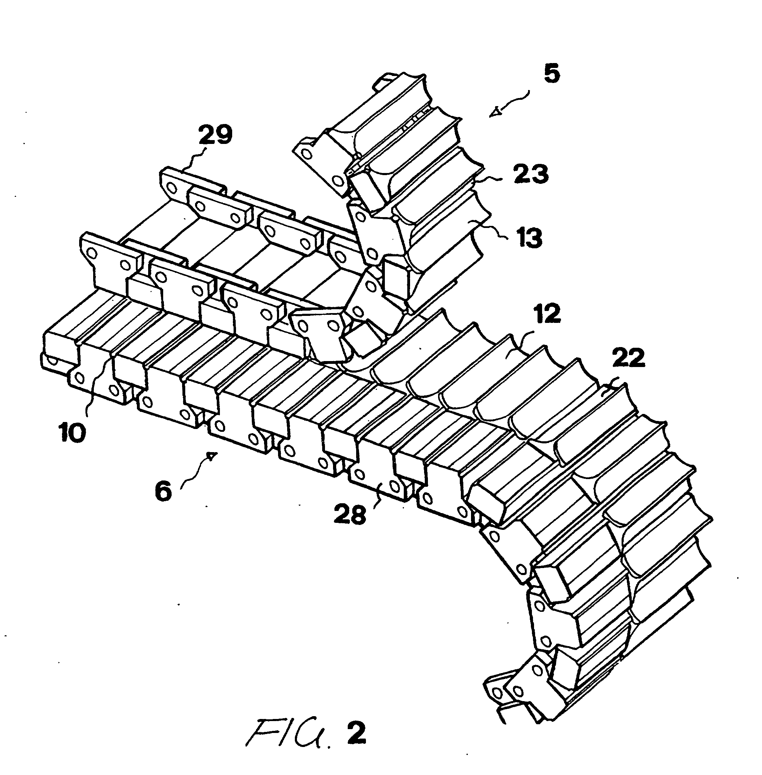

Figure 2 is an axonometric view illustrating a method for coupling the top chain and bottom chain of the device according to the invention;
Figure 3 is a top plan view of the bottom chain of the device according to the invention;
Figure 4 is a cross-sectional view substantially taken along the section line A-A of Figure 3; and
Figure 5 is a further cross-sectional view illustrating a possible coupling mode for coupling the top chain and bottom chain.

### DESCRIPTION OF THE PREFERRED EMBODIMENTS

In the following disclosure, reference will be made to some preferred embodiments of the invention, which have been illustrated, by way of a non limitative example of possible variations of the invention.

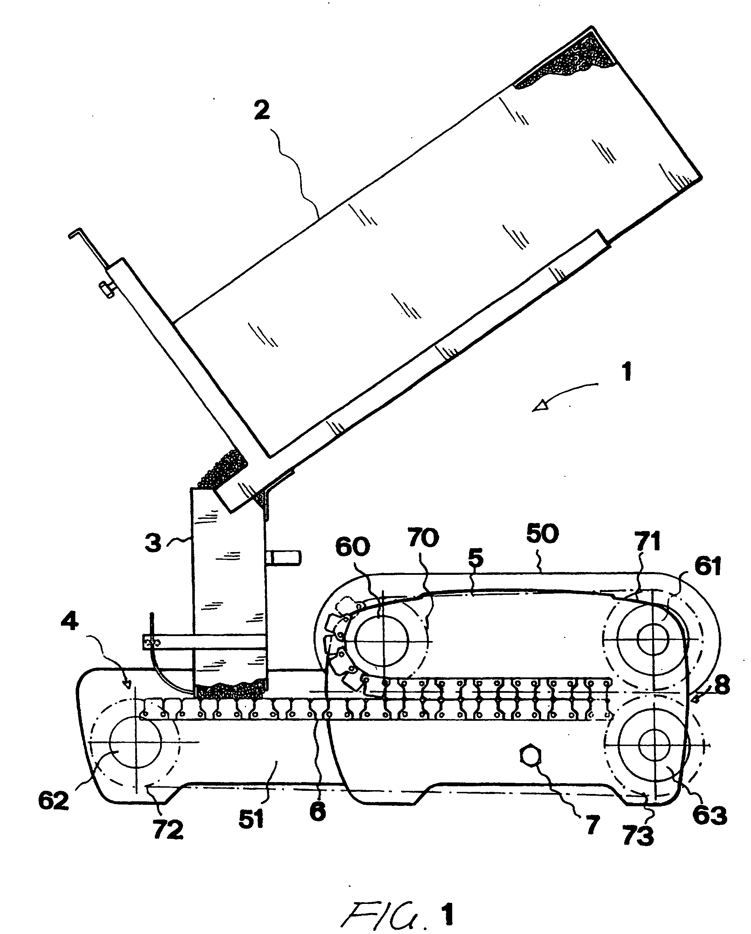

Figure 1 clearly shows the subject device for making stick-supported solid food products according to the invention, and generally indicated by the reference number 1.

The device 1, in particular, comprises a supporting construction including a front shoulder 50 and a rear shoulder, which support respective shafts indicated by the reference numbers 60, 61 and 62, 63, said shafts having horizontal parallel axes.

On each said shafts 60, 61 and 62, 63 a plurality of gear wheels 70, 71 and 72, 73 respectively engaging with a top chain 5 and a bottom chain 6 are assembled.

The supporting construction shoulders are provided with shoulder extensions 51, specifically designed for supporting the rotary shaft 62 on which the gear wheel 72 of the bottom chain 6 is mounted.

The bottom chain 6, in turn, is provided with a plurality of bottom half-molds, including dihedral portions 12 and 22, adapted to engage with corresponding top half-molds, including dihedral portions 13 and 23, and associated with the top chain 5.

The bottom half-molds and top half-molds cooperate with one another to make the solid food product, starting from a food product rib or strip, which is supplied or fed in parallel with the chains 5 and 6.

The device 1 further comprises stick supplying or feeding means, for feeding a plurality of sticks to said device, said stick feeding means including a stick feeding or supplying hopper 3, conveying the sticks to the product rib feeding lane 4.

The stick 3 supplying hopper also supports a stick vessel 2.

The bottom chain 6 is provided with stick housing chain lanes 10, being arranged in a coupling relationship with the dihedral half-molds 12, 22 pertaining to the bottom chain 6.

The stick housing chain lanes 3 are arranged adjoining the bottom half-molds of the bottom chain 6, in a direction which is substantially perpendicular to the stick feeding or supplying direction.

In this connection it should be apparent that the bottom chain 6 is extended with respect to the top chain 5 thereby providing an easy feeding or supplying of supporting sticks to the device 1.

Actually, the stick supplying hopper 3 is coupled to the extensions 51 of said shoulders, in order to convey the supporting sticks to the extended portion of the bottom chain 6.

The bottom chain 6 comprises moreover a plurality of chain links 28, articulatedly coupled by coupling pins 30 and, being adjoining with one another, provide the above mentioned stick housing chain lanes 10.

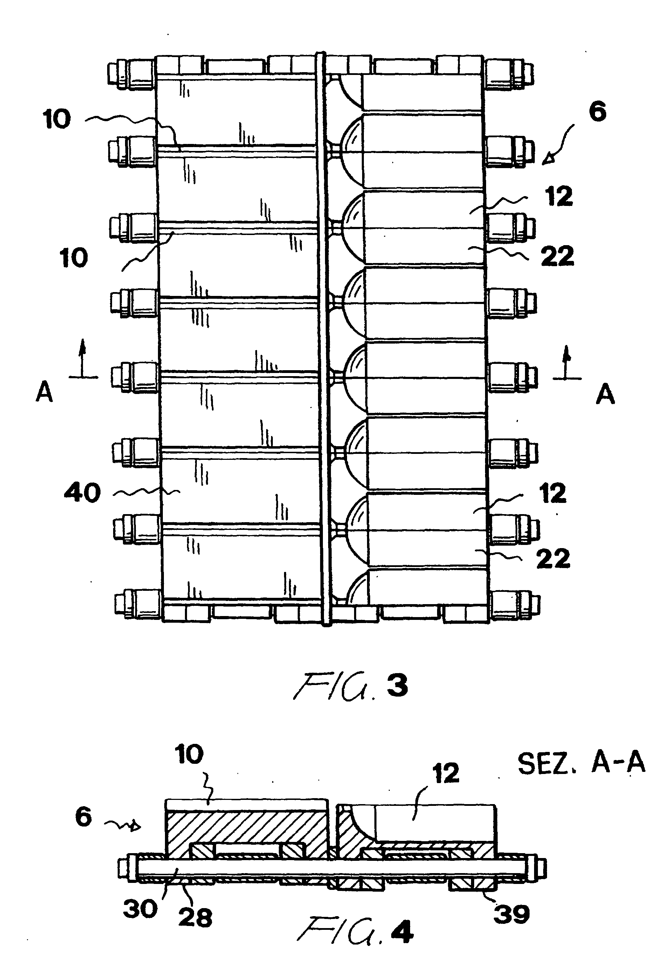

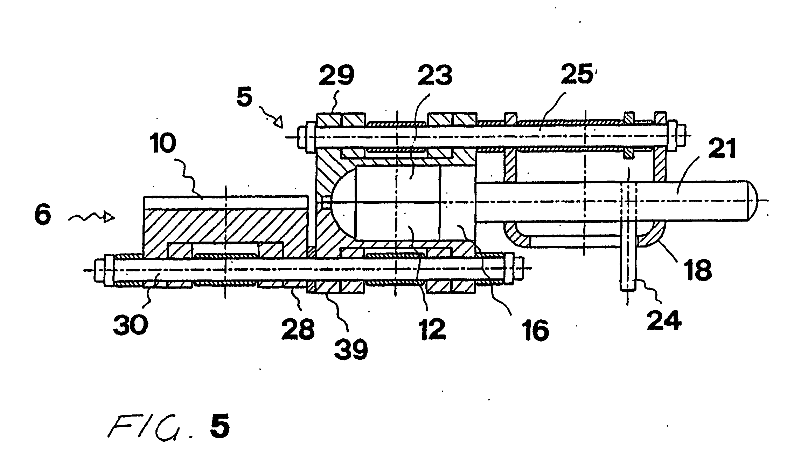

Said pins 30 of said bottom chain 6, allow to articulatedly connect chain links 39 including respectively dihedral portions 13 and 23 which, being adjoining with one another, provide the bottom half-molds pertaining to said bottom chain 6; such an arrangement is clearly shown in Figures 3-4.

The top chain 5 comprises a plurality of chain links 29, articulatedly coupled by coupling pins 25 and being provided with several dihedral portions 13 and 23, which, being adjoined one another, provide the top half-molds pertaining to said top chain 5.

Each chain link 29 of the top chain 5 also comprises an upturned bracket 18, having a pair of passages defined through its sidewalls, in order to house therein a small rod 21 supporting, at an end portion thereof, a counter-mold 16.

Moreover, each rod 21 is provided with a cross pin 4 projecting from a slot formed through the top wall of the related bracket 18.

The counter-mold 16 can be driven in an axial direction toward the dihedral half-molds 12, 23 in order to sequentially form a plurality of food products made by molding and cutting the product rib supplied to the machine, by means of a forming cam thereagainst is engaged an end portion of said rod 21.

Advantageously, the supporting construction comprises moreover a device 7 for adjusting the shearing or cutting pressure.

The above disclosed device for making stick-supported solid food products according to the present invention operates as follows.

The supporting sticks, in particular, are progressively supplied or fed to the device 1 from the supporting stick supplying hopper 3, each supporting stick being arranged in a corresponding chain lane 10.

Moreover, the supporting sticks are caused to be fed in parallel to the product rib feeding direction, and are so arranged that an end portion thereof affects the area covered by the connected top chain 5 and bottom chain 6.

The bottom half-molds and top half-molds will cooperate with one another in order to make the food product on the end tip portion of the supporting stick and in order to cut through the product rib, to provide continuously formed stick-supported solid food products.

From the above disclosure it should be apparent that the invention fully achieves the above mentioned aim and objects.

The device of the invention, as disclosed, would be susceptible to several modifications and variations coming within the scope of the invention as defined in the accompanying claims.

## Claims

1. A device for making stick-supported solid food products, comprising a supporting construction including a front shoulder and a rear shoulder, said shoulders supporting horizontal and parallel rotary axis shafts, each said shaft supporting a plurality of gear wheels respectively meshing with a top chain and a bottom chain, said bottom chain being provided with bottom half-molds adapted to engage with corresponding top half-molds of said top chain to form said food product, starting from a product rib supplied in parallel with said chains, **characterized in that** said device comprises moreover supporting stick supplying means for supplying with supporting sticks said device, and that said bottom chain is provided with chain lanes for housing therein said supporting sticks, said chain lanes being arranged in a coupling relationship with respect to said bottom half-molds of said bottom chain.

2. A device for making stick-supported solid food products, according to Claim 1, **characterized in that** said supporting stick housing chain lanes adjoin the bottom half-molds of said bottom chain in a direction substantially perpendicular to the supporting stick feeding direction.

3. A device for making stick-supported solid food products, according to Claims 1 or 2, **characterized in that** said bottom chain is extended with respect to said top chain, thereby facilitating the supplying of said supporting sticks to said device.

4. A device for making stick-supported solid food products, according to one or more of the preceding Claims, **characterized in that** said supporting stick supplying means comprise a supporting stick supplying hopper, conveying said supporting sticks to the product rib feeding lane, and supporting a stick vessel.

5. A device for making stick-supported solid food products, according to one or more of the preceding Claims, **characterized in that** said supporting construction shoulders are provided with shoulder extensions in order to support one of said rotary shafts of said bottom chain.

6. A device for making stick-supported solid food products, according to Claim 5, **characterized in that** said supporting stick supplying hopper is coupled to said shoulder extensions in order to supply said supporting sticks to said bottom chain extended portion.

7. A device for making stick-supported solid food products, according to one or more of the preceding Claims, **characterized in that** said bottom chain comprises a plurality of chain links articulatedly coupled by coupling pins and which, adjoining one another, provide said supporting stick housing chain lanes.

8. A device for making stick-supported solid food products, according to Claim 7, **characterized in that** said coupling pin of said bottom chain also articulatedly connect chain links provided with recesses which, adjoining one another, provide said bottom chain bottom half-molds.

9. A device for making stick-supported solid food products, according to one or more of the preceding Claims, **characterized in that** said top chain comprises a plurality of chain links, articulatedly coupled by coupling pins, said chain links being provided with adjoining recesses defining said top chain top half-molds.

10. A device for making stick-supported solid food products, according to Claim 9, **characterized in that** each said chain link of said top chain is provided with an upturned bracket including a pair of passages formed through the side walls thereof, in order to house therein a rod supporting at one end thereof a counter-mold.

11. A device for making stick-supported solid food products, according to Claim 10, **characterized in that** each said rod is provided with a cross-pin projecting from a slot formed through a top wall of said bracket.

12. A device for making stick-supported solid food products, according to one or more of the preceding Claims, **characterized in that** said counter-mold is driven axially toward dihedral half-molds to make a plurality of food products obtained by molding and cutting said product rib, by a forming cam thereagainst an end portion of said rods is engaged.

13. A device for making stick-supported solid food products, according to one or more of the preceding Claims, **characterized in that** said supporting construction also supports a cutting pressure adjusting device.

## Patentansprüche

1. Vorrichtung zur Herstellung von festen Lebensmittelprodukten am Stiel, mit einer Tragkonstruktion, die eine vordere Schulter und eine hintere Schulter aufweist, wobei die Schultern horizontale und parallele drehbare Wellen tragen, jede Welle eine Mehrzahl von jeweils mit einer oberen Kette und einer unteren Kette in Eingriff stehenden Zahnrädern trägt, die untere Kette mit unteren Formhälften versehen ist, die so angepasst sind, dass sie mit entsprechenden oberen Formhälften der oberen Kette in Eingriff gehen, um ausgehend von einer parallel zu den Ketten gelieferten Produktrippe das Lebensmittelprodukt zu formen,
**dadurch gekennzeichnet, dass**
die Vorrichtung darüber hinaus Trägerstielzufuhreinrichtungen zur Beschickung der Vorrichtung mit Trägerstielen aufweist und dass die untere Kette mit Kettenbahnen versehen ist, um darin die Trägerstiele aufzunehmen, wobei die Kettenbahnen im Verhältnis zu den unteren Formhälften der unteren Kette in einem Koppelungsverhältnis angeordnet sind.

2. Vorrichtung zur Herstellung von festen Lebensmittelprodukten am Stiel nach Anspruch 1,
**dadurch gekennzeichnet, dass**
die die Trägerstiele aufnehmenden Kettenbahnen in einer im Wesentlichen senkrecht zu der Trägerstielzufuhrrichtung verlaufenden Richtung an die unteren Formhälften der unteren Kette angrenzen.

3. Vorrichtung zur Herstellung von festen Lebensmittelprodukten am Stiel nach den Ansprüchen 1 oder 2,
**dadurch gekennzeichnet, dass**
die untere Kette in Bezug auf die obere Kette erweitert ist, wodurch die Zufuhr der Trägerstiele zu der Vorrichtung erleichtert wird.

4. Vorrichtung zur Herstellung von festen Lebensmittelprodukten am Stiel nach einem oder mehreren der vorangegangenen Ansprüche,
**dadurch gekennzeichnet, dass**
die Trägerstielzufuhreinrichtungen einen die Trägerstiele zuführenden Vorratsbehälter umfassen, welcher die Trägerstiele zu der Produktrippenzufuhrbahn fördert und einen Stielbehälter trägt.

5. Vorrichtung zur Herstellung von festen Lebensmittelprodukten am Stiel nach einem oder mehreren der vorangegangenen Ansprüche,
**dadurch gekennzeichnet, dass**
die Schultern der Tragkonstruktion mit Schultererweiterungen versehen sind, um eine der drehbaren Wellen der unteren Kette zu tragen.

6. Vorrichtung zur Herstellung von festen Lebensmittelprodukten am Stiel nach Anspruch 5,
**dadurch gekennzeichnet, dass**
der die Trägerstiele zuführende Vorratsbehälter mit den Schultererweiterungen verbunden ist, um die Trägerstiele dem erweiterten Abschnitt der unteren Kette zuzuführen.

7. Vorrichtung zur Herstellung von festen Lebensmittelprodukten am Stiel nach einem oder mehreren der vorangegangenen Ansprüche,
**dadurch gekennzeichnet, dass**
die untere Kette eine Mehrzahl von Kettengliedern aufweist, die mittels Verbindungsstiften gelenkig miteinander verbunden sind, die aneinander angrenzend die die Trägerstiele aufnehmenden Kettenbahnen bereitstellen.

8. Vorrichtung zur Herstellung von festen Lebensmittelprodukten am Stiel nach Anspruch 7,
**dadurch gekennzeichnet, dass**
die Verbindungsstifte der unteren Kette ebenso mit Ausnehmungen versehene Kettenglieder gelenkig miteinander verbinden, die aneinander angrenzend die unteren Formhälften der unteren Kette bereitstellen.

9. Vorrichtung zur Herstellung von festen Lebensmittelprodukten am Stiel nach einem oder mehreren der vorangegangenen Ansprüche,
**dadurch gekennzeichnet, dass**
die obere Kette eine Mehrzahl von Kettengliedern aufweist, die mittels Verbindungsstiften gelenkig miteinander verbunden sind, wobei die Kettenglieder mit aneinander angrenzenden Ausnehmungen versehen sind, welche die oberen Formhälften der oberen Kette festlegen.

10. Vorrichtung zur Herstellung von festen Lebensmittelprodukten am Stiel nach Anspruch 9,
**dadurch gekennzeichnet, dass**
jedes Kettenglied der oberen Kette mit einer nach oben ausgerichteten Halterung mit durch deren Seitenwände hindurch ausgebildeten Durchgängen versehen ist, um darin eine an einem ihrer Enden eine Gegenform tragende Stange aufzunehmen.

11. Vorrichtung zur Herstellung von festen Lebensmittelprodukten am Stiel nach Anspruch 10,
**dadurch gekennzeichnet, dass**
jede Stange mit einem sich durch eine obere Wand der Halterung hindurch ausgebildeten Schlitz erstreckenden Querbolzen versehen ist.

12. Vorrichtung zur Herstellung von festen Lebensmittelprodukten am Stiel nach einem oder mehreren der vorangegangenen Ansprüche,
**dadurch gekennzeichnet, dass**
die Gegenform axial in Richtung diedrischer Formhälften verfahren wird, um eine durch Formen und Schneiden der Produktrippe erhaltene Mehrzahl von Lebensmittelprodukten durch einen Formgebungsnocken herzustellen, gegen den ein Endabschnitt der Stangen in Eingriff gebracht wird.

13. Vorrichtung zur Herstellung von festen Lebensmittelprodukten am Stiel nach einem oder mehreren der vorangegangenen Ansprüche,
**dadurch gekennzeichnet, dass**
die Tragkonstruktion auch eine Schneiddruckregulierungseinrichtung trägt.

## Revendications

1. Dispositif pour fabriquer des produits alimentaires solides supportés par un bâton, comprenant une construction de support incluant un soutien avant et un soutien arrière, lesdits soutiens supportant des arbres rotatifs d'axes horizontaux et parallèles, chacun desdits arbres supportant plusieurs engrenages s'engrenant respectivement avec une chaîne inférieure et une chaîne supérieure, ladite chaîne inférieure étant munie de demi-moules inférieurs adaptés pour s'engager avec les demi-moules supérieurs correspondants de ladite chaîne supérieure afin de former ledit produit alimentaire, en partant d'un support de produit (« product rib ») fournit en parallèle avec lesdites chaînes, **caractérisé en ce que** ledit dispositif comprend de plus des moyens d'apport de bâtons de support, et **en ce que** ladite chaîne inférieure est munie d'espaces de type chaîne pour y loger lesdits bâtons de support, lesdits espaces de type chaîne étant disposés dans une relation de couplage par rapport audits demi-moules de ladite chaîne inférieure.

2. Dispositif pour fabriquer des produits alimentaires solides supportés par un bâton, selon la revendication 1, **caractérisé en ce que** les espaces de type chaîne logeant les bâtons de support avoisinent les demi-moules inférieurs de ladite chaîne inférieure dans une direction sensiblement perpendiculaire à la direction d'alimentation des bâtons de support.

3. Dispositif pour fabriquer des produits alimentaires solides supportés par un bâton, selon les revendications 1 ou 2, **caractérisé en ce que** ladite chaîne inférieure s'étend en fonction de ladite chaîne supérieure, de ce fait facilitant l'apport desdits bâtons de support audit dispositif.

4. Dispositif pour fabriquer des produits alimentaires solides supportés par un bâton, selon l'une quelconque des revendications précédentes, **caractérisé en ce que** lesdits moyens d'apport des bâtons de support comprennent une trémie, transportant lesdits bâtons de support vers l'espace d'alimentation du support de produit, et supportant un récipient contenant des bâtons.

5. Dispositif pour fabriquer des produits alimentaires solides supportés par un bâton, selon l'une quelconque des revendications précédentes, **caractérisé en ce que** lesdits soutiens de construction de support sont munis d'extensions de soutien dans le but de supporter l'un desdits arbres rotatifs de ladite chaîne inférieure.

6. Dispositif pour fabriquer des produits alimentaires solides supportés par un bâton, selon la revendication 5, **caractérisé en ce que** ladite trémie d'apport des bâtons de support est couplée aux dites extensions de soutien dans le but de placer lesdits bâtons de support dans la partie étendue de chaîne inférieure.

7. Dispositif pour fabriquer des produits alimentaires solides supportés par un bâton, selon l'une quelconque des revendications précédentes, **caractérisé en ce que** ladite chaîne inférieure comprend plusieurs maillons de chaînes couplés de manière articulée par des broches de couplages et qui, en se joignant les uns aux autres, fournissent les espaces de type chaîne logeant lesdits bâtons de support.

8. Dispositif pour fabriquer des produits alimentaires solides supportés par un bâton, selon la revendication 7, carcatérisé en ce que lesdites broches de couplage de ladite chaîne inférieure connectent aussi de manière articulée des maillons de chaîne munis de creux qui, en se joignant les uns aux autres, fournissent lesdits demi-moules inférieurs de ladite chaîne inférieure.

9. Dispositif pour fabriquer des produits alimentaires solides supportés par un bâton, selon l'une quelconque des revendications précédentes, **caractérisé en ce que** ladite chaîne supérieure comprend plusieurs maillons de chaîne, couplés de manière articulée par des broches de couplage, lesdits maillons de chaîne étant munis de creux avoisinants définissant lesdits demi-moules supérieurs de la chaîne supérieure.

10. Dispositif pour fabriquer des produits alimentaires solides supportés par un bâton, selon la revendication 9, **caractérisé en ce que** chacun desdits maillons de chaîne de ladite chaîne supérieure est munie d'un crochet tourné vers le haut incluant une paire de passages formée à travers les parois de côté, dans le but d'y loger une tige supportant à une extrémité de celui-ci un contre-moule.

11. Dispositif pour fabriquer des produits alimentaires solides supportés par un bâton, selon la revendication 10, **caractérisé en ce que** chacune desdites tiges est munie d'une broche transversale dépassant d'une fente formée à travers une paroi supérieure dudit crochet.

12. Dispositif pour fabriquer des produits alimentaires solides supportés par un bâton, selon l'une quelconque des revendications précédentes, **caractérisé en ce que** ledit contre-moule est actionné de manière axiale vers des demi-moules dièdres afin de fabriquer plusieurs produits alimentaires obtenus par moulage et découpage desdits supports de produit, par une came de formage située tout contre une partie d'extrémité desdites tiges, qui sont engagés.

13. Dispositif pour fabriquer des produits alimentaires solides supportés par un bâton, selon l'une quelconque des revendications précédentes, **caractérisé en ce que** ladite construction de support supporte aussi un dispositif d'ajustement et de découpage par pression.
